Europäisches Patentamt

**European Patent Office**

Office européen des brevets

(11) Publication number: **0 047 604**
**B1**

# EUROPEAN PATENT SPECIFICATION

(45) Date of publication of patent specification: **28.11.84**

(51) Int. Cl.³: **B 23 K 26/06**

(21) Application number: **81303855.1**

(22) Date of filing: **24.08.81**

(54) Multiple optical beam generation and redirection system.

(30) Priority: **25.08.80 US 181220**

(43) Date of publication of application:
**17.03.82 Bulletin 82/11**

(45) Publication of the grant of the patent:
**28.11.84 Bulletin 84/48**

(84) Designated Contracting States:
**CH DE GB LI**

(56) References cited:
**GB-A-2 032 325**
**US-A-3 943 324**

(73) Proprietor: **PHILIP MORRIS INCORPORATED**
**120 Park Avenue**
**New York, New York 10017 (US)**

(72) Inventor: **Martin, Peter**
**3640 Falstone Road**
**Richmond Virginia 23234 (US)**

(74) Representative: **Bass, John Henton et al**
**REDDIE & GROSE 16 Theobalds Road**
**London WC1X 8PL (GB)**

Courier Press, Leamington Spa, England.

## Description

This invention pertains to optical apparatus and, in particular, to optical apparatus for multiple optical beam generation and redirection.

Systems for generation and redirection of multiple optical beams are well known in the art and are used for a variety of purposes. U.S. patent 4,118,619 discloses one system of this type wherein multiple beam generation is through an optical assembly comprised of coaxial rotating discs. These discs are provided with corresponding mis-aligned sets of through apertures and reflective facets which upon rotation of the discs result in successive redirection of an incoming beam. Resultant multiple pulsed beams are thereby automatically generated by the different discs and are redirected by same to spaced target areas. In the particular system of this patent, these areas are located on a web of cigarette paper for providing perforations in same.

In other systems, beam generation and redirection has been effected by use of beam splitter arrangements situated in the path of the incoming beam. These arrangements divide the beam into a plurality of beams which are then redirected to the target areas. U.S. patent 4,121,595 discloses one such system wherein beams from a laser source are redirected about the periphery of a cigarette filter or across the expanse of a piece of cigarette tipping paper for the purpose of perforating same. In these cases, pulsing of the generated beams is through pulsing of the laser source itself.

In yet another system of this type disclosed in U.K. patent application No. 2022987A, spatial segments of an incoming beam are separated by mirrors situated in confronting relation to the respective segments. The separated beams are then redirected by further reflective elements to different target areas about the periphery of a cigarette tip. Again, in this system, pulsing of the generated beams is through laser source pulsing.

U.S. patent 3,943,324 discloses a further system in which various incoming beams are first divided into multiple beams by a beam splitter arrangement and the subsequent split beams further divided by mirrors arranged to confront particular segments of the divided beams. The confronted beam segments are then redirected to focusing mirrors which focus the segments to different target areas about the periphery of a refractory tubing. The non-confronted segments are likewise redirected to focusing mirrors which focus these segments onto further respective peripheral tube areas.

According to the present invention there is provided an apparatus for generating and redirecting multiple optical beams from an applied beam, comprising first reflective means having a locus of alternately arranged light-reflective and light-transmissive elements for alternately and successively coupling an applied beam to first and second paths and a second light-reflective means arranged in at least one of these paths for confronting a segment of the beam traversing that one path and thereby dividing such beam into first and second beams. The aforesaid second means may be adjustably movable so as to enable control of the expanse of the confronted segment and thereby the relative intensities of the first and second beams.

In preferred arrangement, a third light-reflective means is employed and is arranged in the other path to confront a segment of the beam in that path. Third and fourth beams are thereby provided by this third light-reflective means. This third means can also be adjustably movable so as to permit control of the relative intensities of the third and fourth beams.

Preferably the first light-reflective means is a rotatable disc with the light transmissive and light-reflective elements disposed on a circular locus about the disc periphery. The second and third light-reflective means, in turn, can be movable mirrors.

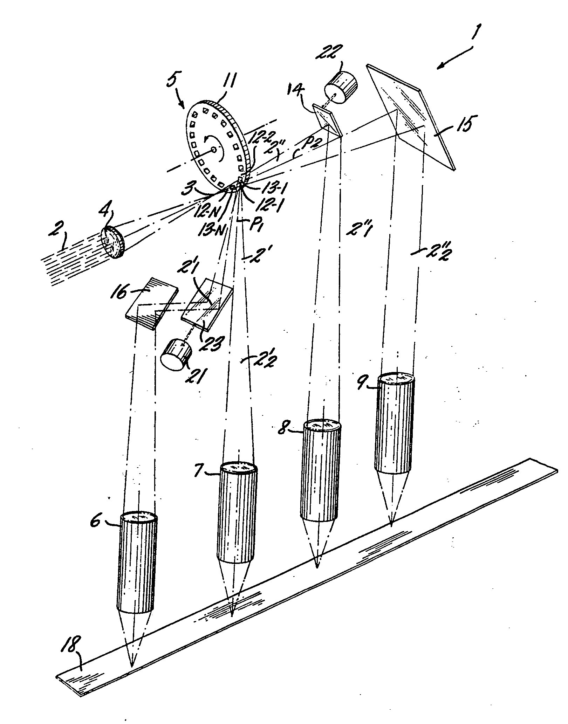

One embodiment of the invention will now be described, by way of example, with reference to the accompanying drawing which illustrates an optical beam generation and redirection system in accordance with the invention.

In the depicted system 1, light beam 2 generated by a light source (not shown) which, typically, might be a laser, is directed at a focusing lens 4 which focuses the beam at a point 3 forward of an optical multi-beam generation and redirection assembly 5. The latter assembly causes the beam 2 to be successively and alternately converted into first and second pulsed beams 2' and 2'' each of which during its presence is itself controllably segmented by the assembly into two further pulsed beams. Thus, beam 2' is segmented into pulsed beams $2'_1$ and $2'_2$. while pulsed beam 2'' is segmented into pulsed beams $2''_1$ and $2''_2$. The resultant four pulsed beams arrive at target locations which, in the case shown, are the input ends of beam conduction and focusing devices 6, 7, 8 and 9. These devices, in turn, may, for example, convey the beams in focused form to spaced regions across the expanse of a planar web 18 of cigarette tipping paper for perforating same.

The assembly 5 comprises a light-reflective means 11 which is configured to alternately and successively redirect the light beam 2 along first and second light paths $P_1$ and $P_2$ to thereby form the pulsed beams 2' and 2''. More particularly, as shown, the means 11 is in the form of a rotatable circular disc provided about its periphery in a circular locus with a succession of alternately arranged light-reflective facets 12-1 through 12-N and light-transmissive elements 13-1 through 13-N. Upon confrontation of the beam 2 with the facets 12-1 through 12-N, the beam is redirected to the path $P_1$ to form the beam 2' and upon confrontation with the transmissive elements 13-1 through 13-N the beam is passed to the path $P_2$ to form the beam 2''. Rotation of the disc thus results in successive alternate formation of such beams, thereby providing the pulsed nature thereof.

The beams 2' and 2'' issued from the reflective means 11 are each confronted by respective reflectors 23 and 14 which are adjustably movable via pivoting and translating devices 21 and 22, respectively, and which act to controllably segment their respective beams into two further beams. In particular, each of these reflectors is adjusted to confront a beam portion which is such as to provide a desired ratio of the intensities of the resultant two beams. In the present illustrative case, the reflector 23 confronts and redirects a beam portion $2'_1$ which is such that its intensity and that of beam portion $2'_2$ which is allowed to pass uninhibited, are substantially equal. Similarly, reflector 14 confronts and redirects a beam portion $2''_1$ which is such that its intensity and that of beam portion $2''_2$, which is allowed to pass uninhibited, are substantially equal to each other and to the equal intensities of beams $2'_1$ and $2'_2$. The result is four beams of substantially equal intensity which are conducted and focused by the devices 6—9 to result in perforations of equal size in the web 18.

As can be appreciated, by pivoting and or translating the mirrors 13 and 14, the relative intensities of the beams $2'_1$, $2''_1$, $2'_2$ and $2''_2$ can be varied to any desired value. This will, of course, result in perforations of different desired size.

Generation of beam 2' by the disc 11 is such that the passed beam portion $2'_2$ is substantially aligned with the optical axis and centered on the input end of the device 7. Redirected beam portion $2'_1$, on the other hand, confronts a fixed reflector 16 which brings the beam to the center of and in alignment with the optical axis of the input end of device 6. In the case of beams $2''_1$ and $2''_2$, centering and optical alignment are via the adjustable reflector 14 and further fixed reflector 15, respectively. Further refinements in alignment can be made through movement of the mirrors 23 and 15. Additionally, mirrors 15 and 16 can be made movable so as to further facilitate required adjustments.

The assembly 5 thus provides alternate and successive pairs of pulsed beams of controllably intensity at pairs of target areas through the use of alternate beam reflection and transmission coupled with controllable beam segmenting and, thus, provides a simple and inexpensive variable beam redirection assembly.

The apparatus described thus provides an optical beam redirection system which simultaneously provides at least three pulsed beams without laser source pulsing, the intensities of the beams being readily controllable.

## Claims

1. Apparatus for generating and redirecting multiple optical beams from an applied beam comprising first reflective means (5) having a locus of alternately arranged light-reflective (12) and light-transmissive (13) elements, whereby confrontation of the applied beam with the light-reflective elements causes the beam to be redirected to a first path ($P_1$) and confrontation of the applied beam with the light-transmissive elements causes the beam to pass to a second path ($P_2$), characterised by second light-reflective means (23) arranged in one of said paths ($P_1$), to confront a segment ($2'_1$) of the cross section of the beam (2') traversing said one path ($P_1$), thereby generating first ($2'_1$) and second ($2'_2$) light beams therefrom.

2. Apparatus in accordance with claim 1, characterised in that the second light-reflective means (23) is movably mounted so as to enable control of the expanse of the confronted segment of the cross section of the beam in the said one path whereby the ratio of the intensities of the first and second beams can be selectively adjusted.

3. Apparatus in accordance with claim 2, characterised in that the second light-reflective means (23) is pivotably and translatably mounted.

4. Apparatus in accordance with claim 2 or 3, characterised in that the second light-reflective means is arranged in the second path.

5. Apparatus in accordance with claim 2 or 3, characterised in that the second light-reflective means is arranged in the first path.

6. Apparatus in accordance with claim 5 characterised by third light-reflective means (14) arranged in the said second path to confront a segment of the cross section of the beam traversing that path, thereby generating third and fourth light beams ($2''_1$, $2''_2$) therefrom.

7. Apparatus in accordance with claim 6, characterised in that the third light-reflective means (14) is movably mounted so as to enable control of the expanse of the confronted segment of the cross section of the beam in the said second path, whereby the ratio of the intensities of the third and four beams can be selectively adjusted.

8. Apparatus in accordance with claim 6 or 7, characterised in that the second and third light-reflective means are positioned such that the intensities of the first, second, third and fourth beams are substantially equal.

9. Apparatus in accordance with claim 6, 7 or 8, characterised in that the second and third reflective (23, 14) means each comprise a planar reflector.

10. Apparatus in accordance with claim 6, 7, 8 or 9, characterised by light conducting and focusing means (6, 7, 8, 9) for receiving the first, second, third and fourth beams and bring-

5        **0 047 604**        6

ing same to focus at spaced positions in a common plane.

11. Apparatus in accordance with any one of the preceding claims, characterised in that the first reflective means (5) comprises a rotatably mounted disc (11) and the light-reflective elements (12-1...12-N) and light-transmissive elements (13-1...13-N) are on a circular locus.

12. Apparatus in accordance with any one of the preceding claims, characterised by means (4) for focusing said applied beam at a point adjacent said first reflective means.

## Patentansprüche

1. Apparat zum Erzeugen und Umlenken mehrerer optischer Strahlenbündel aus einem eingegebenen Bündel, mit ersten reflektierenden Mitteln (5), die einen Ort von alternierend angeordneten lichtreflektierenden (12) und lichtdurchlässigen (13) Elementen haben, wodurch die Konfrontation des eingegebenen Bündels mit den lichtreflektierenden Elementen eine Umlenkung des Bündels in eine erste Bahn bewirkt und die Konfrontation des eingegebenen Bündels mit den lichtdurchlässigen Elementen des Bündels bewirkt, dass dieses eine zweite Bahn (P2) durchläuft, gekennzeichnet durch zweite lichtreflektierende Mittel (23), die in einer der Bahnen (P1) angeordnet sind, um ein Segment $(2'_1)$ des Querschnittes des Bündels $(2')$, welches diese besagte eine Bahn (P1) durchläuft, zu konfrontieren, um dadurch aus ihm erste $(2'_1)$ und zweite $(2'_2)$ Lichtbündel zu erzeugen.

2. Apparat nach Anspruch 1, dadurch gekennzeichnet, dass das zweite lichtreflektierende Mittel (23) beweglich angeordnet ist zur Ermöglichung der Steuerung des Hereinerstreckens des konfrontierten Segmentes des Bündelquerschnittes in die besagte eine Bahn, wodurch das Verhältnis der Intensitäten des ersten und zweiten Bündels nach Belieben eingestellt werden kann.

3. Apparat nach Anspruch 2, dadruch gekennzeichnet, dass das zweite lichtreflektierende Mittel (23) schwenkbar und verschiebbar gehaltert ist.

4. Apparat nach Anspruch 2 oder 3, dadurch gekennzeichnet, dass das zweite lichtreflektierende Mittel in der zweiten Bahn angeordnet ist.

5. Apparat nach Anspruch 2 oder 3, dadurch gekennzeichnet, dass das zweite lichtreflektierende Mittel in der ersten Bahn angeordnet ist.

6. Apparat nach Anspruch 5, gekennzeichnet durch dritte lichtreflektierende Mittel (14), die in der besagten zweiten Bahn angeordnet sind, um ein Segment des Bündels zu konfrontieren, welches diese Bahn durchläuft, um auf diese Weise dritte und vierte Lichtbündel $(2''_1, 2''_2)$ aus demselben zu erzeugen.

7. Apparat nach Anspruch 6, dadurch gekennzeichnet, dass das dritte lichtreflektierende Mittel (14) so beweglich gehaltert ist, dass es eine Steuerung des Hineinragens des konfrontierten Segmentes des Querschnittes des Bündels in die besagte zweite Bahn ermöglicht, wodurch das Verhältnis der Intensitäten des dritten und vierten Bündels nach Belieben eingestellt werden kann.

8. Apparat nach Anspruch 6 oder 7, dadurch gekennzeichnet, dass das zweite und das dritte lichtreflektierende Mittel so positioniert sind, dass die Intensitäten des ersten, zweiten, dritten und vierten Bündels im wesentlichen gleich gross sind.

9. Apparat nach Anspruch 6, 7 oder 8, dadurch gekennzeichnet, dass das zweite und das dritte lichtreflektierende Mittel (23, 14) je aus einem planaren Reflektor bestehen.

10. Apparat nach Anspruch 6, 7, 8 oder 9, gekennzeichnet durch lichtleitende und fokussierende Mittel (6, 7, 8, 9) zum Empfang des ersten, zweiten, dritten und vierten Bündels und zum Herbeiführen des Fokussierens derselben in in Abstand voneinander gelegenen Stellen in einer gemeinsamen Ebene.

11. Apparat nach irgend einem der vorhergehenden Ansprüche, dadurch gekennzeichnet, dass das erste reflektierende Mittel (5) aus einer drehbar gehalterten Scheibe (11) besteht und dass die lichtreflektierenden Elemente (12-1...12-N) und die lichtdurchlässigen Elemente (13-1...13-N) sich auf einem kreisförmigen Ort befinden.

12. Apparat nach irgend einem der vorhergehenden Ansprüche, gekennzeichnet durch Mittel (4) zum Fokussieren des besagten applizierten Bündels an einem Punkt, der bei dem ersten reflektierenden Mittel angeordnet ist.

## Revendications

1. Appareil pour produire et dévier des faisceaux optiques multiples provenant d'un faisceau initial, comprenant un premier moyen réflecteur (5) composé d'une configuration d'éléments réflecteurs de lumière (12) et d'éléments transmetteurs de lumière (13) agencés de manière que l'impact du faisceau initial sur les éléments réflecteurs provoque la déviation selon un premier chemin $(P_1)$ et l'impact du faisceau initial sur les éléments transmetteurs provoque sa transmission selon un second chemin $(P_2)$, caractérisé par un deuxième moyen réflecteur (23) disposé sur l'un des dits chemins $(P_1)$ de manière à recevoir l'impact d'un segment $(2'_1)$ de la section du faisceau $(2')$ qui suit le dit chemin $(P_1)$ et à créer ainsi à partir de ce faisceau un premier $(2'_1)$ et un second $(2'_2)$ faisceau.

2. Appareil selon la revendication 1, caractérisé en ce que le deuxième moyen réflecteur (23) est supporté par une monture mobile de façon à permettre la commande de l'amplification du segment réfléchi de la section du faisceau passant par le dit chemin, ce qui per-

4

7     **0 047 604**     8

met d'ajuster sélectivement le rapport entre les intensités du premier et du second faisceau.

3. Appareil selon la revendication 2, caractérisé en ce que le deuxième moyen réflecteur (23) est mobile en pivotement et en translation.

4. Appareil selon la revendication 2 ou la revendication 3, caractérisé en ce que le deuxième moyen réflecteur est disposé sur le second chemin.

5. Appareil selon la revendication 2 ou la revendication 3, caractérisé en ce que le deuxième moyen réflecteur est disposé sur le premier chemin.

6. Appareil selon la revendication 5, caractérisé par un troisième moyen réflecteur (14) disposé sur le dit second chemin pour recevoir l'impact d'un segment de la section du faisceau qui suit le second chemin, de sorte que ce faisceau crée un troisième et un quatrième faisceau ($2''_1$, $2''_2$).

7. Appareil selon la revendication 6, caractérisé en ce que le troisième moyen réflecteur (14) est mobile de manière à permettre la commande de l'amplification du segment réfléchi de la section du faisceau passant selon le dit second chemin, ce qui permet d'ajuster sélectivement le rapport entre les intensités du troisième et du quatrième faisceau.

8. Appareil selon la revendication 6 ou la revendication 7, caractérisé en ce que les deuxième et troisième moyens réflecteurs sont placés de manière que les premier, deuxième, troisième et quatrième faisceaux sont sensiblement égaux.

9. Appareil selon la revendication 6, 7 ou 8, caractérisé en ce que le deuxième et le troisième moyen réflecteur comprennent chacun un réflecteur plan.

10. Appareil selon la revendication 6, 7, 8 ou 9, caractérisé par des moyens de conduction et de focalisation de la lumière recevant le premier, le deuxième, le troisième et le quatrième faisceau et focalisant chacun un des dits faisceaux sur un point distinct d'un même plan.

11. Appareil selon l'une quelconque des revendications précédentes, caractérisé en ce que le premier moyen réflecteur (5) comprend un disque (11) monté rotativement et en ce que les éléments réflecteurs (12-1...12-N) et les éléments transmetteurs (13-1...13N) sont répartis dans une configuration circulaire.

12. Appareil selon l'une quelconque des revendications précédentes, caractérisé par des moyens de focalisation (4) capables de focaliser le faisceau initial sur un emplacement adjacent au premier moyen réflecteur.

5